# EUROPÄISCHE PATENTSCHRIFT

(11) **EP 2 033 810 B1**
(45) Veröffentlichungstag und Bekanntmachung des Hinweises auf die Patenterteilung: **22.09.2010**
(21) Anmeldenummer: 08160474.6
(22) Anmeldetag: 16.07.2008
(51) Int. Cl.: B60C 1/00, B60C 5/14

(54) **Fahrzeugluftreifen**
Pneumatic tyres for a vehicle
Pneus de véhicule

(30) Priorität: 05.09.2007 DE 102007042179
(43) Veröffentlichungstag der Anmeldung: 11.03.2009
(73) Patentinhaber: Continental Reifen Deutschland GmbH, 30165 Hannover (DE)
(72) Erfinder: van Agen, Rob, 30659 Hannover (DE); van Barneveld, Claus, 30827 Garbsen (DE); Ohn, Markus, 30161 Hannover (DE)
(74) Vertreter: Finger, Karsten

(56) Entgegenhaltungen:
- EP-A- 0 931 676
- EP-A- 1 437 371
- EP-A- 1 647 420
- US-A- 3 871 432

## Beschreibung

Die Erfindung betrifft einen Fahrzeugluftreifen in Radialbauart mit einem Laufstreifen, einem Gürtel, Wulstbereichen mit Wulstkernen sowie mit einer zumindest einlagig ausgeführten Karkasse, welche die Wulstkerne von radial innen nach radial außen umläuft oder in den Wulstbereichen geklemmt ist und einer Innenschicht, wobei zwischen Innenschicht und Karkasse zumindest eine zusätzliche Lage in Form eines Gummistreifens angeordnet ist, welche ringkreisförmig über den Umfang des Reifens geschlossen ist und wobei je ein zusätzlicher Gummistreifen im Bereich der Gürtelkanten-Korbbögen angeordnet ist, wobei die Gummistreifen voneinander axial beabstandet angeordnet sind.

Eine derartige Reifenkonstruktion, bei der wenigstens eine zu den notwendigen Reifenbauteilen zusätzliche Gummilage in Form eines Gummistreifens zwischen Karkasse und Innenschicht angeordnet ist, ist zur Vermeidung der sogenannten "Linerpenetration" bekannt. Linerpenetrationen treten während des Reifenherstellungsprozesses bei hohen Karkassausspannungen, z.B. durch Heißschrumpf der Karkassfestigkeitsträger während des Heizpressens oder während der Bombage (Erhebung) des auf einer zylindrischen Aufbautrommel gewickelten Reifenrohlings in der Art auf, dass die Karkassfestigkeitsträger in die Innenschicht (Liner) eindringen und diese schwächen. Die Dauerhaltbarkeit des Reifens ist gemindert. Um diese Linerpenetration zu vermeiden, ist es beispielsweise aus der den nächstliegenden Stand der Technik bildenden EP-A-0 931 676 bekannt, einen mit Kurzfasern durchsetzten Gummistreifen zu verwenden. Es ist ebenfalls bekannt einen mit ausgerichteten Kurzfasern durchsetzten Gummistreifen zu verwenden oder den Gummistreifen ausreichend dick zu gestalten und diesen zwischen Innenschicht und Karkasse anzuordnen. Die Dicke des zusätzlichen Streifens bringt jedoch auch Nachteile in der Art mit sich, dass die Gestehungskosten des Reifens, die Wärmeentwicklung im Betrieb des Reifens als auch das Gewicht des Reifens und somit ebenfalls sein Rollwiderstand unerwünscht erhöht sind.

Die Dauerhaltbarkeit des Reifens ist ebenfalls durch Sauerstoffalterung im Gürtelbereich, insbesondere im Gürtelkantenbereich, negativ beeinflusst. Der Gürtelbereich ist mit vergleichsweise viel Gummimaterial umgeben, wodurch sich dieser Bereich im Betrieb des Reifens auch durch die Relativbewegungen der Gürtellagen besonders erwärmt. Durch diesen hohen Stress in Verbindung mit Sauerstoff neigt der Crown-Bereich besonders zur Alterung und somit zur verminderten Dauerhaltbarkeit.

Es ist daher die Aufgabe der vorliegenden Erfindung, einen dauerhaltbaren Fahrzeugreifen bereitzustellen, dessen erhöhte Dauerhaltbarkeit durch eine verlangsamte Sauerstoffalterung des Reifens bei einer gleichzeitigen Vermeidung von Linerpenetrationen erreicht werden soll.

Die Aufgabe wird gelöst, indem je ein zusätzlicher Gummistreifen im Bereich der Gürtelkanten-Korbbögen angeordnet ist, wobei die Gummistreifen voneinander axial beabstandet angeordnet sind, dass die Gummistreifen aus einer Gummimischung bestehen, welche mit Glasflocken durchsetzt ist und dass die Glasflocken anisotrop ausgerichtet sind, so dass sie mit ihrer größten Fläche parallel zur Innenschicht und zur Karkasse angeordnet sind.
Die zusätzlichen Gummilagen bzw. Gummistreifen (auch "Squeegees" genannt), welche zwischen Innenschicht und Karkasse im Bereich der Gürtelkanten-Korbbögen angeordnet sind, weisen Glasflocken auf. Glasflocken meint flache, sich zweidimensional in etwa flächig erstreckende ein- oder mehrschichtige Glasteilchen, welche meist von gradlinig verlaufenden Kanten begrenzt sind, welche unter verschiedenen Winkeln zu einem Drei- oder Vieleck zusammenlaufen. Diese Glasflocken sind mit ihrer flächigen Erstreckung parallel zur Karkasse und zur Innenschicht ausgerichtet und in der Gummimatrix des Squeegee's regelmäßig statistisch verteilt. Das Gummimaterial ist vorzugsweise eine übliche tire skim Gummimischung, basierend auf Naturgummi mit Füllstoffen Ruß oder amorphe Kieselsäure.
Der Bereich der Gürtelkanten-Korbbögen unterliegt während der Reifenherstellung höchster Dehnung und beinhaltet den Bereich der Gürtelkanten, welcher im Betriebszustand des Reifens großem Stress unterliegt und daher in Verbindung mit eingedrungenem Sauerstoff zur Sauerstoffalterung neigt. Die flächig in der Gummimatrix des Squeegees enthaltenen Glasflocken behindern die Sauerstoffdiffusion durch den Reifen, so dass die Sauerstoffalterung des Reifens verlangsamt ist. Gleichzeitig ist der Modul des Gummistreifens durch die enthaltenen Glasflocken erhöht, so dass eine Linerpenetration, auch bei einer vergleichsweise geringen Dicke des Squeegee's, wirksam verhindert werden kann. Das Gewicht des Reifens ist nur geringfügig erhöht, während die Dauerhaltbarkeit wesentlich verbessert ist. Denn sowohl die Sauerstoffalterung als auch eine Linerpenetrationen sind vermieden.

Die Dicke des Squeegee's kann von 0,6mm bis 10mm betragen und ist vorzugsweise 0,8mm dick. Vorzugsweise ist die Dicke des Squeegees über dessen gesamte Reifenquerschnittserstreckung gleich. Die Breite des Squeegee's beträgt zwischen 40-55mm.
Die Maße des Squeegee's sind von der Reifendimension, insbesondere von der Auslegung des Gürtelpaketes abhängig zu wählen. Wesentlich ist, dass im Bereich der Gürtelkanten-Korbbögen Squeegees angeordnet sind.
Die Squeegees sind dabei üblicherweise derart unter den Gürtelkanten positioniert, dass sich zwischen ihnen eine Lücke von x mm (mit x = Gürtelkante - 30mm (oder 40mm)) ergibt.

Die Glasflocken weisen eine Dicke kleiner gleich 5µm und eine Breite kleiner gleich 600 µm, vorzugsweise eine Dicke von 3µm und eine Breite von etwa 300µm auf.

Die Glasflocken bestehen vorzugsweise aus C- oder E-Glas von geringer Dicke zwischen 2 und 5µm.

Vorteilhaft ist es, wenn das Squeegee bis zu 15 phr (*p*arts per *h*undred parts of *r*ubber), vorzugsweise 12 phr aufweist.

Die Haftung von Glasflocken an Kautschuk ist verbessert, wenn die Oberfläche der Glasflocken ein Silan - Coating aufweist.

Die Wirkung des Squeegee's in Bezug auf die Verlangsamung der Sauerstoffalterung und in Bezug auf die Vermeidung der Linerpenetration ist in allen Ausführungsformen besonders dann wirkungsvoll erreichbar, wenn die Glasflocken neben- und übereinander derart versetzt zueinander angeordnet sind, so dass sie einander teilweise überlappen. Idealerweise sind die Glasflocken vollständig von der Gummimatrix umgeben und berühren einander nicht.

Weitere Merkmale, Vorteile und Einzelheiten der Erfindung werden nun anhand der Zeichnungen, die schematische Ausführungsbeispiele darstellen, näher erläutert. Es zeigen die:
- Fig.1: einen Teilquerschnitt durch einen erfindungsgemäßen Fahrzeugluftreifen;
- Fig.2: einen Querschnitt durch das Squeegee und dessen radial benachbarte Reifenbauteile;
- Fig.3: eine dreidimensionale Ansicht einer Glasflocke.

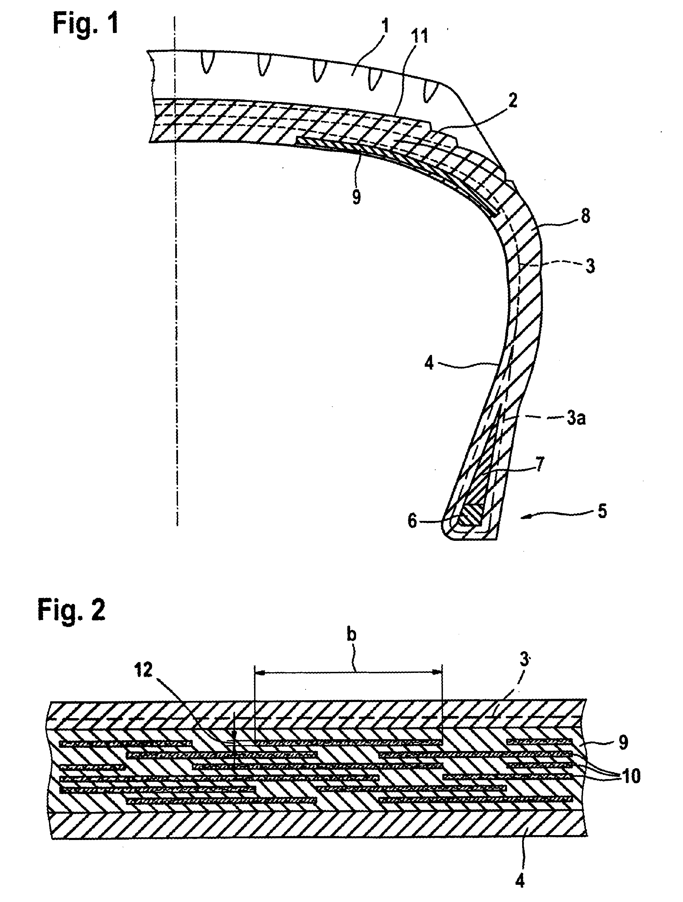

In der **Fig.1** ist ein Teilquerschnitt durch einen erfindungsgemäßen PKW-Luftreifen dargestellt. Die wesentlichen Bestandteile, aus welchen sich der dargestellte Radialreifen zusammensetzt sind: ein profilierter Laufstreifen 1, ein bei der gezeigten Ausführung aus zwei Lagen bestehender Gürtel 2, eine einlagig ausgeführte Karkasse 3, eine luftdicht ausgeführte Innenschicht 4, Wülste 5 mit Wulstkernen 6 und Wulstkemprofilen 7, sowie Seitenwände 8 und zwei zusätzliche Gummistreifen 9 (Squeegees), welche mit Glasflocken 10 gefüllt sind. Die beiden Lagen des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 20° und 35° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von axial innen nach axial außen geführt, ihre Hochschläge 3a verlaufen neben den Wulstkemprofilen 7 in Richtung Gürtel 2. Die Gummistreifen 9 bestehen aus einer Gummimischung, welche mit 12 phr mit Glasflocken 10 durchsetzt ist und im Bereich Gürtelkante - Korbbogen zwischen Innenschicht 4 und Karkasse 3 über den Umfang des Reifens geschlossen angeordnet sind. Das Anlagemaß a der zum Zenith weisenden Kante beträgt dabei 15-20mm. Die in den Gummistreifen 9 enthaltenen Glasflocken 10 sind flache, sich zweidimensional in etwa flächig erstreckende ein- oder mehrschichtige Glasteilchen, welche meist von gradlinig verlaufenden Kanten begrenzt sind, welche unter verschiedenen Winkeln zu einem Drei- oder Vieleck zusammenlaufen. Die Glasflocken 10 sind anisotrop in der Gummimischung des Gummistreifens 9 derart ausgerichtet, dass sie mit ihrer größten Fläche parallel zur Innenschicht 4 und zur Karkasse 3 angeordnet sind. Die Glasflocken 10 sind in den Gummistreifen 9 regelmäßig statistisch verteilt, so dass die Glasflocken nebeneinander und übereinander versetzt zueinander angeordnet sind. Die flächig in der Gummimatrix enthaltenen Glasflocken 10 behindern einerseits die Sauerstoffdiffusion durch den Reifen, so dass die Sauerstoffalterung des Reifens verlangsamt ist. Gleichzeitig ist der Modul des Gummistreifens 9 durch die in diesem enthaltenen Glasflocken 10 vorteilhaft erhöht, so dass die Linerpenetration auch bei einer vergleichsweise geringen Dicke des Squeegee's 9 wirksam verhindert werden kann. Der Reifen ist vergleichsweise leicht und kostengünstig in seiner Herstellung. Die Dauerhaltbarkeit des Reifens ist erhöht.
Die Glasflocken 10 haben eine Dicke 12 von etwa 3 µm und eine Breite b von etwa 350 µm. Die Oberfläche der Glasflocken 10 weist einen Silanüberzug zur besseren Gummi-Glasflockenhaftung auf. Der Gummistreifen 9 hat eine gleich bleibende Dicke von 0,8mm und eine Breite von 50mm z.B. bei der Reifendimension 205/55R16. Die Glasflocken können während der Herstellung des Squeegees z.B. durch Kalandrieren der Gummi-Glasflockenmischung ausgerichtet und eingeregelt werden.

Die **Fig.2** zeigt einen Schnitt durch ein Squeegee 9 und der schematisch dargestellten Glasflocken 10 innerhalb des Squeegee's (Gummistreifens) 9. Der Gummistreifen 9 ist mit Glasflocken 10 gefüllt, welche mit ihrer flächigen Erstreckung parallel zum Verlauf der Innenschicht 4 und der Karkasse 3 -also parallel zur Gummistreifenerstreckungangeordnet sind. Die Glasflocken 10 sind nebeneinander und übereinander versetzt zueinander innerhalb der Gummimatrix des Gummistreifens 9 angeordnet, so dass die übereinander angeordneten Glasflocken 10 einander teilweise überlappen und kein direkter, senkrecht zur Lagenerstreckung freier, geradliniger Diffusionsweg für den Sauerstoff zur Verfügung steht. Hierdurch ist die Sauerstoffdiffusion durch den Reifen wesentlich behindert. Die Sauerstoffalterung ist verlangsamt. Durch die Anordnung der Glasflocken im Squeegee ist gleichzeitig der Modul des Gummistreifens 9 erhöht, wodurch wirksam einer Linerpenetration entgegengewirkt ist, weil die Karkasse keinen Kontakt mit der Innenschicht erhält.

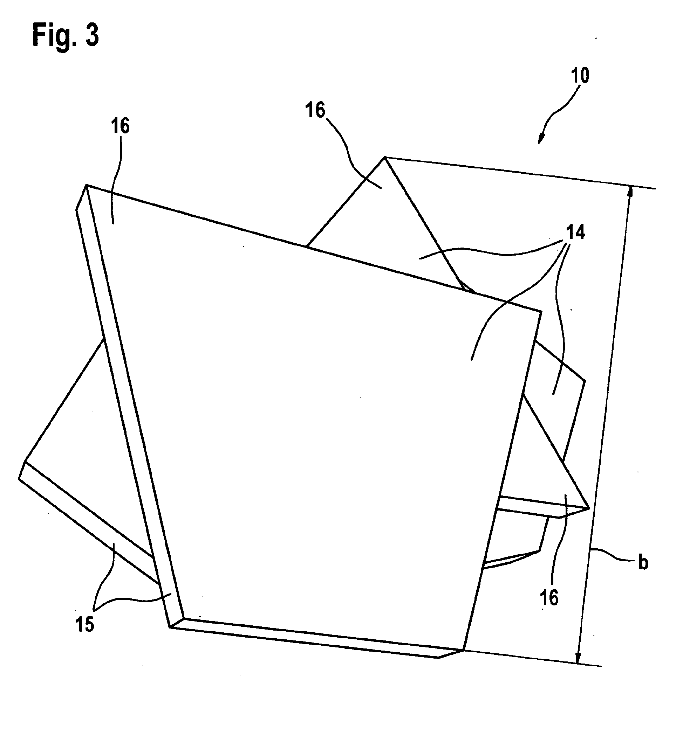

Die **Fig.3** zeigt eine dreidimensionale Ansicht einer Glasflocke 10, welche bis zu 15phr im Squeegee 9 enthalten ist. Die Glasflocke 10 hat eine Dicke 12 von 3 µm und eine Breite b von 350 µm. Die Oberfläche der Glasflocke 10 weist einen Silanüberzug zur besseren Gummi-Glasflockenhaftung auf. Die Glasflocke 10 ist ein flaches, sich zweidimensional in etwa flächig erstreckendes mehrschichtiges Glasteilchen, welches meist von gradlinig verlaufenden Kanten 15 begrenzt sind, welche unter verschiedenen Winkeln zu einem Drei- oder Vieleck zusammenlaufen. Die einzelnen Schichten 14, aus denen sich die Glasflocke 10 zusammensetzt, weisen eine unterschiedliche Umfangsform auf. Es steht eine große Oberfläche mit vielen Kanten 15 und Vorsprüngen 16 zur Verfügung, wodurch die Gummihaftung verbessert ist.

### Bezugszeichenliste

### (Teil der Beschreibung)

- 1: Laufstreifen
- 2: Gürtel
- 3: Karkasse
- 4: Innenschicht
- 5: Wulstbereich
- 6: Wulstkern
- 7: Wulstkernprofil
- 8: Seitenwand
- 9: Gummistreifen (Squeegee) 10 Glasflocke
- 11: Gürtelkante
- 12: Dicke der Glasflocke
- b: Breite der Glasflocke
- 13: Gürtelkante
- 14: Schicht
- 15: Kante
- 16: Vorsprung

## Patentansprüche

1. Fahrzeugluftreifen in Radialbauart mit einem Laufstreifen (1), einem Gürtel (2), Wulstbereichen (5) mit Wulstkernen (6) sowie mit einer zumindest einlagig ausgeführten Karkasse (3), welche die Wulstkerne (6) von radial innen nach radial außen umläuft oder in den Wulstbereichen (5) geklemmt ist und einer Innenschicht (4), wobei zwischen Innenschicht (4) und Karkasse (3) zumindest eine zusätzliche Lage in Form eines Gummistreifens (9) angeordnet ist, welcher ringkreisförmig über den Umfang des Reifens geschlossen ist und wobei je ein zusätzlicher Gummistreifen (9) im Bereich der Gürtelkanten (13)-Korbbögen angeordnet ist, wobei die Gummistreifen (9) voneinander axial beabstandet angeordnet sind,
**dadurch gekennzeichnet,**
**dass** der Gummistreifen (9) aus einer Gummimischung besteht, welche mit Glasflocken (10) durchsetzt ist,
**dass** die Glasflocken (10) anisotrop ausgerichtet sind, so dass sie mit ihrer größten Fläche parallel zur Innenschicht (4) und zur Karkasse (3) angeordnet sind.

2. Fahrzeugreifen nach einem der vorangehenden Ansprüche,
**dadurch gekennzeichnet, dass** die Glasflocken (10) eine Dicke (12) kleiner gleich 5µm und eine Breite (b) kleiner gleich 600 µm aufweisen.

3. Fahrzeugreifen nach einem oder mehreren der vorangehenden Ansprüche,
**dadurch gekennzeichnet, dass** die Oberfläche der Glasflocken (10) ein Silan-Coating aufweist.

4. Fahrzeugreifen nach einem oder mehreren der vorangehenden Ansprüche,
**dadurch gekennzeichnet, dass** die Glasflocken (10) aus C- oder E-Glas bestehen.

5. Fahrzeugreifen nach einem oder mehreren der vorangehenden Ansprüche,
**dadurch gekennzeichnet, dass** die Glasflocken (10) neben- und übereinander versetzt zueinander angeordnet sind.

## Claims

1. Pneumatic vehicle tyre of a radial type of construction with a tread rubber (1), a breaker belt (2), bead regions (5) with bead cores (6) and with an at least single-ply carcass (3), which runs around the bead cores (6) from the radial inside to the radial outside or is clamped in the bead regions (5), and an inner layer (4), wherein, arranged between the inner layer (4) and the carcass (3) is at least one additional ply in the form of a rubber strip (9), which is closed in the form of an annulus around the circumference of the tyre, and wherein an additional rubber strip (9) is respectively arranged in the region of the three-centre curves of the belt edges (13), the rubber strips (9) being arranged axially spaced apart from one another, **characterized in that** the rubber strip (9) consists of a rubber mixture which is interspersed with glass flakes (10) and **in that** the glass flakes (10) are anisotropically oriented, so that they are arranged with their largest surface area parallel to the inner layer (4) and the carcass (3).

2. Pneumatic vehicle tyre according to one of the preceding claims, **characterized in that** the glass flakes (10) have a thickness (12) less than or equal to 5 µm and a width (b) less than or equal to 600 µm.

3. Pneumatic vehicle tyre according to one or more of the preceding claims, **characterized in that** the surface of the glass flakes (10) has a silane coating.

4. Pneumatic vehicle tyre according to one or more of the preceding claims, **characterized in that** the glass flakes (10) consist of C or E glass.

5. Pneumatic vehicle tyre according to one or more of the preceding claims, **characterized in that** the glass flakes (10) are arranged offset next to and above one another.

## Revendications

1. Bandage pneumatique à structure radiale pour roue de véhicule, doté d'une bande de roulement (1), d'une ceinture (2), de zones de bourrelet (5) présentant des âmes de bourrelet (6) ainsi que d'une carcasse (3) réalisée en au moins une couche, qui recouvre les âmes de bourrelet (6) depuis le côté radialement intérieur jusqu'au côté radialement extérieur ou qui est pincée dans les zones de bourrelet (5), et d'une couche intérieure (4), au moins une couche supplémentaire qui présente la forme d'une bande de caoutchouc (9) étant disposée entre la couche intérieure (4) et la carcasse (3), étant fermée autour de la périphérie du pneu en forme d'anneau circulaire et une bande supplémentaire de caoutchouc (9) étant disposée dans la zone de chacune des anses de panier des bords de ceinture (13), les bandes de caoutchouc (9) étant disposées à distance l'une de l'autre dans la direction axiale,
**caractérisé en ce que**
la bande de caoutchouc (9) est constituée d'un mélange de caoutchouc traversé par des flocons de verre (10) et
**en ce que** les flocons de verre (10) sont orientés de manière anisotrope de telle sorte que leur plus grande surface soit disposée parallèlement à la couche intérieure (4) et à la carcasse (3).

2. Bandage pneumatique pour roue de véhicule selon l'une des revendications précédentes, **caractérisé en ce que** les flocons de verre (10) ont une épaisseur (12) inférieure ou égale à 5 µm et une largeur (b) inférieure ou égale à 600 µm.

3. Bandage pneumatique pour roue de véhicule selon l'une ou plusieurs des revendications précédentes, **caractérisé en ce que** la surface des flocons de verre (10) présente un revêtement de silane.

4. Bandage pneumatique pour roue de véhicule selon l'une ou plusieurs des revendications précédentes, **caractérisé en ce que** les flocons de verre (10) sont constitués de verre C ou de verre E.

5. Bandage pneumatique pour roue de véhicule selon l'une ou plusieurs des revendications précédentes, **caractérisé en ce que** les flocons de verre (10) sont disposés les uns à côté des autres et les uns au-dessus des autres avec un décalage.
